Europäisches Patentamt

European Patent Office

Office européen des brevets

(11) Veröffentlichungsnummer: **0 202 417**
**B1**

(12) **EUROPÄISCHE PATENTSCHRIFT**

(45) Veröffentlichungstag der Patentschrift:
**10.08.88**

(21) Anmeldenummer: **86103640.8**

(22) Anmeldetag: **18.03.86**

(51) Int. Cl.⁴: **B 23 P 15/16**

(54) **Verfahren zum Herstellen von Spinndüsenplatten.**

(30) Priorität: **17.05.85 DE 3517729**

(43) Veröffentlichungstag der Anmeldung:
**26.11.86 Patentblatt 86/48**

(45) Bekanntmachung des Hinweises auf die Patenterteilung:
**10.08.88 Patentblatt 88/32**

(84) Benannte Vertragsstaaten:
**AT CH DE FR GB IT LI NL SE**

(56) Entgegenhaltungen:
**CH-A-494 067**
**DE-A-1 627 732**
**DE-A-3 118 335**
**FR-A-1 288 846**
**GB-A-1 176 889**
**GB-A-1 422 300**

(73) Patentinhaber: **Kernforschungszentrum Karlsruhe GmbH, Weberstrasse 5 Postfach 3640, D-7500 Karlsruhe 1 (DE)**

(72) Erfinder: **Becker, Erwin, Prof. Dr., Strählerweg 18, D-7500 Karlsruhe 41 (DE)**
Erfinder: **Ehrfeld, Wolfgang, Dr., Reutstrasse 27, D-7500 Karlsruhe 41 (DE)**
Erfinder: **Hagmann, Peter, Dr., Nagoldstrasse 9c, D-7514 Leopoldshafen (DE)**

## Beschreibung

Die Erfindung betrifft ein Verfahren zum Herstellen von Spinndüsenplatten nach dem Oberbegriff von Anspruch 1.

Bei der großtechnischen Herstellung von Fasern aus organischem oder anorganischem Material wird der Ausgangsstoff in fließfähigem Zustand durch Spinndüsenplatten gepreßt, die zahlreiche Spinndüsenkanäle enthalten. Die Spinndüsenkanäle bestehen in den meisten Fällen aus einer Düsenkapillare, durch die das zu verspinnende Material austritt und einem wesentlich weiteren Vorkanal, dem das zu verspinnende Material zugeführt wird. Die im allgemeinen zylindrischen bzw. trichterförmigen Vorkanäle können relativ leicht durch Bohren oder Stechen eingebracht werden, während das Einbringen der in vielen Fällen profilierten, z. B. mit sternförmigem Querschnitt versehenen Düsenkapillaren aufwendigere Techniken, z. B. Drahterodieren oder erosives Senken erfordert.

Spinndüsenplatten sind Verschleißteile. Insbesondere Spinndüsenplatten mit profilierten Düsenkapillaren stellen bei der bisherigen Herstellungsweise einen nicht zu unterschätzenden Kostenfaktor für die zu erzeugenden Faserprodukte dar. Außerdem liegt bei der bisherigen Herstellungsweise für profilierte Düsenkapillaren die mit tragbarem Aufwand erreichbare Grenze der kritischen Abmessungen im allgemeinen bei etwa 30 μm. Dadurch ergeben sich Einschränkungen bei der Konstruktion des Filaments.

Ausgehend von diesem Stand der Technik hat die vorliegende Erfindung die Aufgabe, ein besonders wirtschaftliches Verfahren für die Massenfertigung von Spinndüsenplatten, insbesondere mit profilierten Düsenkapillaren zu schaffen, bei dem sich die kritischen Abmessungen von Düsenkapillaren mit tragbarem Aufwand auf Werte unter die mit den vorbekannten Verfahren erreichbare Grenze absenken lassen.

Zur Lösung dieser Aufgabe wird ein Verfahren gemäß Anspruch 1 vorgeschlagen. Der Anspruch 2 betrifft eine bevorzugte Ausführungsform des Verfahrens.

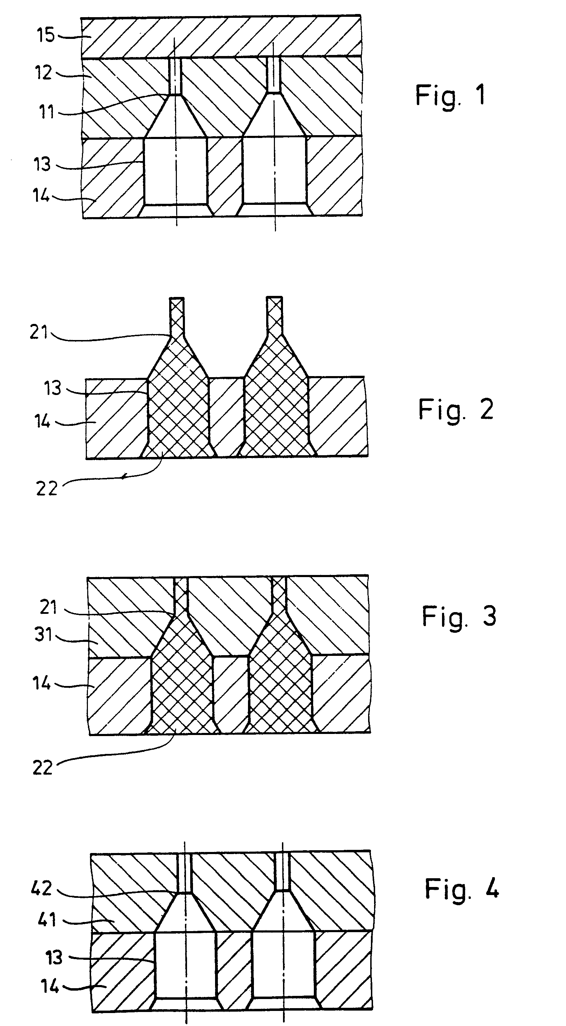

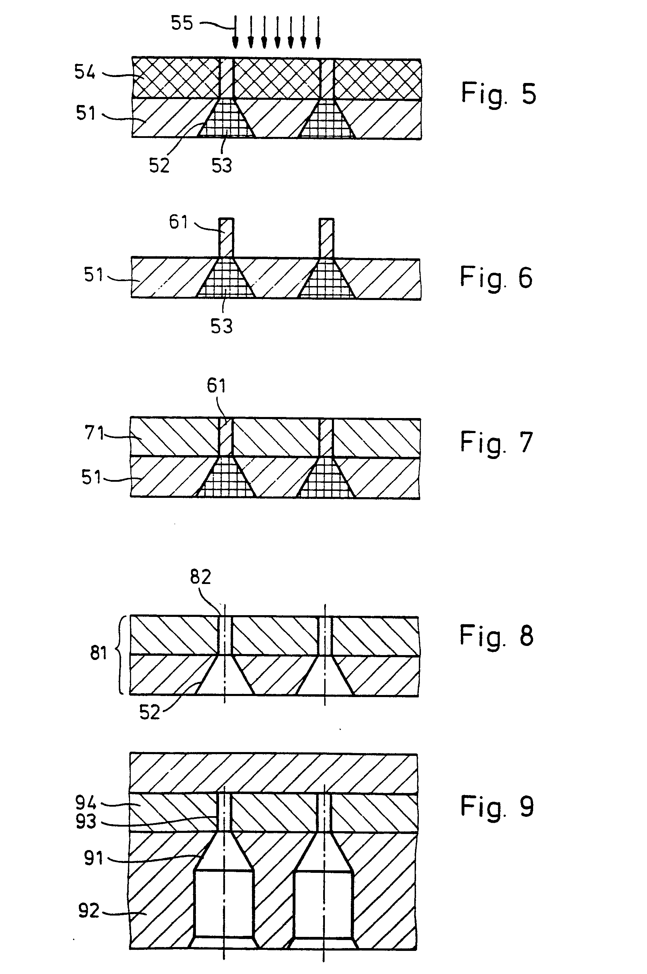

Das Verfahren wird im folgenden anhand der Figuren 1 bis 9 beispielhaft erläutert, wobei sich die Figuren 1 bis 4 und 9 auf Anspruch 1 und die Figuren 5 bis 8 auf Anspruch 2 beziehen.

Nach Fig. 1 wird eine Formplatte 12, die den Spinndüsenkanälen entsprechende Formkanäle 11 enthält mit einer Zuführungskanäle 13 enthaltenden Galvanikelektrode 14 so zusammengefügt, daß die Formkanäle 11 und die Zuführungskanäle 13 aneinander anschließen. Nach Verschließen der Formkanäle 11 mit einer Abdeckplatte 15 werden die Formkanäle 11 und die Zuführungskanäle 13 unter Vakuum gemeinsam mit einem elektrisch isolierenden Abformmaterial 22 aufgefüllt. Nach der Verfestigung des Abformmaterials werden die Abdeckplatte 15 und die Formplatte 12 entfernt, wodurch Negativformen 21 (Fig. 2) der Spinndüsenkanäle freigelegt werden, die mit der Galvanikelektrode 14 über das in den Zuführungskanälen 13 enthaltene Abformmaterial 22 verbunden sind. In einem Galvanikbad wird auf der Galvanikelektrode 14 eine Galvanikschicht 31 (Fig. 3) erzeugt, die die Negativformen 21 der Spinndüsenkanäle bündig einschließt. Nach Einebnen der Galvanikschicht 31 und Entfernen der Negativformen 21 und des restlichen Abformmaterials 22 verbleibt entsprechend Fig. 4 eine Spinndüsenplatte 41 mit Spinndüsenkanälen 42, die mit der Zuführungskanäle 13 enthaltenden Galvanikelektrode 14 verbunden ist. Auf die Anwendung von Vakuum kann verzichtet werden, wenn man das Abformmaterial am Ende der Düsenkapillaren austreten läßt und das überschüssige Abformmaterial entfernt.

Bei den meisten Anwendungen, insbesondere wenn die Spinndüsenplatte im Betrieb größeren Druckkräften ausgesetzt werden soll, wird man die Galvanikelektrode 14 als mechanische Verstärkung im Verbund mit der Spinndüsenplatte 41 belassen und das zu verspinnende Material durch die Zuführungskanäle 13 zuführen. Selbstverständlich läßt sich die Galvanikelektrode 14 auch entfernen, z. B. durch einfaches Auflösen, wenn für ihre Herstellung ein Material verwendet wird, das sich in einem Lösungsmittel auflöst, welches die Spinndüsenplatte 41 nicht angreift. Das Entfernen der Galvanikelektrode 14 gelingt auch ohne ihre Zerstörung durch vorsichtiges Abziehen der Spinndüsenplatte 41 von der Galvanikelektrode 14, wenn die Haftfestigkeit der Galvanikschicht 31 in bekannter Weise durch entsprechende Vorbehandlung, z. B. Passivierung der Galvanikelektrode 14, vermindert worden ist.

Um die zerstörungsfreie Entfernung der Galvanikelektrode zu erleichtern, kann man auch vor dem Verfahrensschritt c) eine dünne Schicht eines leicht löslichen elektrisch leitenden Materials auf die Galvanikelektrode aufbringen, die zur Trennung von Galvanikelektrode und Spinndüsenplatte herausgelöst wird. Umgekehrt kann man bei Bedarf auch durch geeignete Vorbehandlung, z. B. Aktivierung der Galvanikelektrode, die spätere Haftfestigkeit der Spinndüsenplatte auf der Galvanikelektrode erhöhen.

Die bei dem erfindungsgemäßen Verfahren benutzte Formplatte kann mit den Techniken hergestellt werden, die heute zur Herstellung von Spinndüsenplatten benutzt werden, also beispielsweise durch Einbringen von Spinndüsenkanälen in eine Metallplatte durch Drahterodieren, erosives Senken und Bohren. Da mit Hilfe einer Formplatte zahlreiche Spinndüsenplatten hergestellt werden können, kann bei der Herstellung der Formplatte ein höherer Aufwand in Kauf genommen werden als bei der Herstellung von Spinndüsenplatten. Die bekannten Techniken lassen sich daher in einer aufwendigeren Form, z. B. mit dünneren Drähten beim Drahterodieren, oder mit feineren Elektroden beim erosiven Senken anwenden. Dadurch können die kritischen Abmessungen der Düsenkapillaren bei Bedarf mit tragbarem Aufwand auf Werte unter die mittels den vorbekannten Verfahren erreichbare Grenze abgesenkt werden.

Bei besonders hohen Ansprüchen an die kritischen Abmessungen der Düsenkapillaren, ihre Querschnittsform und an das Verhältnis von Kapillarlänge zu Kapillardurchmesser ist die Verwendung einer gemäß Anspruch 2 hergestellten Formplatte angezeigt. Anhand der Figuren 5 bis 8 wird ein spezielles Ausführungsbeispiel für die Herstellung der Formplatte gemäß Anspruch 2 beschrieben.

In Fig. 5 bedeutet 51 eine Galvanikelektrode, die an den für die Düsenkapillaren vorgesehenen Positionen trichterförmige Vorkanäle 52 enthält, die mit einem leicht entfernbarem Füllmaterial 53 bündig verschlossen sind. 54 ist eine Schicht aus durch energiereiche Strahlung in seinen Eigenschaften veränderbarem Material (Resistmaterial), die mit der Galvanikelektrode 51 verbunden ist. Durch partielles Bestrahlen mit energiereicher Strahlung 55 und partielles Entfernen des Resistmaterials unter Ausnutzung der durch die Strahlung erzeugten unterschiedlichen Materialeigenschaften werden Negativformen 61 (Fig. 6) der Düsenkapillaren erzeugt, die mit der Galvanikelektrode 51 über das Füllmaterial 53 in Verbindung stehen. In einem Galvanikbad wird auf der Galvanikelektrode 51 eine Galvanikschicht 71 (Fig. 7) erzeugt, die die Negativformen 61 der Düsenkapillaren bündig einschließt. Nach Einebnen der Galvanikschicht 71 und Entfernen der Negativformen 61 wird im Verfahrensschritt g lediglich das Füllmaterial 53 der Galvanikelektrode 51 entfernt. Es verbleibt eine Formplatte 81 mit aus Düsenkapillaren 82 und Vorkanälen 52 bestehenden Formkanälen (Fig. 8). Als Füllmaterial 53 kann sowohl ein elektrisch leitender als auch ein elektrisch isolierender Stoff verwendet werden. Mit elektrisch leitendem Füllmaterial ergibt sich ein relativ scharfkantiger Übergang zwischen den Düsenkapillaren 82 und den Vorkanälen 52. Mit elektrisch isolierendem Füllmaterial wird ein kontinuierlicherer Übergang erzielt, wobei dieser für die praktische Anwendung im allgemeinen günstige Effekt noch dadurch verstärkt werden kann, daß der kleinste Durchmesser der Vorkanäle deutlich größer als der Durchmesser der Düsenkapillaren gewählt wird.

Als energiereiche Strahlung kommen sowohl Korpuskularstrahlen als auch elektrodmagnetische Wellen, insbesondere die von einem Elektronensynchrotronerzeugte Röntgenstrahlung (Synchrotronstrahlung) in Frage. Während man bei der Verwendung elektromagnetischer Wellen zur Erzeugung der gewünschten Strukturen in bekannter Weise mit Masken arbeitet, kann man bei Verwendung von Korpuskularstrahlen die Struktur auch durch elektromagnetische Steuerung erzeugen.

In manchen Fällen, z. B. wenn der Kapillarbereich der Spinndüsenplatte aus Edelmetall hergestellt werden soll, kann es zweckmäßig sein, bei der Durchführung des Verfahrens nach Anspruch 1, unter Abwandlung von Fig. 1 entsprechend Fig. 9, die trichterförmigen Vorlaufkanäle 91 in der Galvanikelektrode 92 unterzubringen. Die dann benötigte lediglich Düsenkapillaren 93 enthaltende Formplatte 94 läßt sich ebenfalls nach Anspruch 2 herstellen, wobei eine Galvanikelektrode ohne Vorkanäle verwendet wird, die im Verfahrensschritt g vollständig entfernt wird.

Bei der Herstellung von Spinndüsenplatten nach dem in Fig. 1 bis 4 dargestellten Verfahren nach Anspruch 1 wird eine Formplatte 12 auf Nickel verwendet. Die die Zuführungskanäle 13 enthaltende Galvanikelektrode 14 ist wie die Abdeckplatte 15 aus Edelstahl gefertigt. Die Abdichtung zwischen der Formplatte 12 und der Abdeckplatte 15 sowie der Galvanikelektrode 14 wird durch eine Feinstbearbeitung der entsprechenden Oberflächen sichergestellt. Als Abformmaterial 22 wird ein nicht vernetzendes Gießharz auf Methacrylat-Basis (Plexit M 60, Röhm GmbH, Darmstadt) verwendet, dem zur Verringerung der Haftung auf den Formoberflächen ein internes Trennmittel (PAT-665, Würtz GmbH & Co KG, Bingen) zugesetzt wird. Die Galvanikschicht 31 wird durch Abscheiden von Nickel auf der Galvanikelektrode 14 in einem chloridfreien Nickelsulfamatbad hergestellt. Das Einebnen der Galvanikschicht 31 erfolgt durch Polierfräsen. Die Negativformen 21 sie das restliche Abformmaterial 22 werden mechanisch aus der Galvanikschicht 31 bzw. Galvanikelektrode 14 entformt, eventuell noch vorhandene Rückstände werden in einem anschließenden Reinigungsschritt mit Dichlormethan aufgelöst.

Soll die Galvanikelektrode 14 nach Herstellung der Spinndüsenplatte 41 aufgelöst werden, so wird als Material Kupfer verwendet, das in einem alkalischen Ätzbad selektiv aufgelöst wird. Die zerstörungsfreie Entfernung der Galvanikelektrode 14 wird durch Aufbringen einer dünnen Kupferschicht auf die Galvanikelektrode erleichtert. Diese Kupferschicht wird gleichfalls in einem alkalischen Ätzbad selektiv aufgelöst.

Zur Herstellung einer Formplatte nach dem in Fig. 5 - 8 dargestellten Verfahren nach Anspruch 2 wird eine Galvanikelektrode 51 aus Edelstahl (Werkstoff Nr. 1.4301) verwendet. Die in die Galvanikelektrode 51 eingebrachten trichterförmigen Vorkanäle 52 werden mit einer Epoxidharzmasse bündig verschlossen. Der Epoxidharzmasse wird zur Verminderung der Haftung auf den Oberflächen der Vorkanäle 52 ein internes Trennmittel zugesetzt, so daß in einem späteren Schritt das Füllmaterial 53 über eine Hilfsplatte, die formschlüssig mit dem Füllmaterial 53 verbunden ist, leicht aus den Vorkanälen 52 mechanisch entfernbar ist. Die Resistschicht 54 wird durch Aufgießen eines Gießharzes auf Methacrylat-Basis (Plexit 74, Röhm GmbH, Darmstadt) mit anschließender Härtung hergestellt. Zur Erhöhung der Haftfestigkeit der Resistschicht 54 aus PMMA wird die Oberfläche der Galvanikelektrode 51 vor dem Aufbringen des Gießharzes durch Sandstrahlen mit Korund mit einer mittleren Körnung von 10 µm aufgerauht. Die partielle Bestrahlung der Resistschicht 54 erfolgt über eine Röntgenmaske mit Sychrotronstrahlung 55 mit einer charakteristischen Wellenlänge λ c = 0,2 nm. Die Röntgenmaske besteht aus einem für die Synchrotronstrahlung weitgehend durchlässigen Maskenträger aus ca. 20 µm starkem Beryllium und einem für Röntgenstrahlung weitgehend undurchlässigen Absorber aus ca. 15 µm starkem Gold. Das partielle Entfernen des bestrahlten Resistmaterials erfolgt in bekannter Weise mit einem flüssigen Entwickler. Die Galvanikschicht 71 wird durch Abscheiden von Wickel auf der Galvanikelektrode 51 in einem chloridfreien Nickelsulfamatbad hergestellt. Die Galvanikschicht 71 wird durch Polierfräsen eingeebnet. Durch erneutes Bestrahlen mit Synchrotronstrahlung und anschließendes Entwickeln werden die Negativformen 61 entfernt. Das Füllmaterial 53 wird wie bereits beschrieben mechanisch aus den Vorkanälen 52 der Galvanikelektrode 51 entfernt.

## Patentansprüche

1. Verfahren zum Herstellen von Spinndüsenplatten mit Spinndüsenkanälen unter Verwendung einer Formplatte, die den Spinndüsenkanälen entsprechende Formkanäle enthält, gekennzeichnet durch folgende Verfahrensschritte:

a) Zusammenfügen der die Formkanäle (11) enthaltenden Formplatte (12) mit einer Zuführungskanäle (13) enthaltenden Galvanikelektrode (14), so, daß die Formkanäle (11) und die Zuführungskanäle (13) aneinander anschließen.

b) Erzeugen von mit der Galvanikelektrode (14) verbundenen Negativformen (21) der Spinndüsenkanäle durch gemeinsames Auffüllen der Formkanäle (11) und der Zuführungskanäle (13) mit einem elektrisch isolierenden Abformmaterial (22) und anschließendes Entfernen der Formplatte(12).

c) Erzeugen einer die Negativformen (21) der Spinndüsenkanäle einschließenden Galvanikschicht (31), Einebnen dieser Galvanikschicht und Entfernen der Negativformen (21) und des restlichen Abformmaterials (22).

2. Verfahren nach Anspruch 1, dadurch gekennzeichnet, daß die Formplatte durch folgende Verfahrensschritte hergestellt wird:

d) Verbinden einer Schicht (54) aus durch energiereiche Strahlung in seinen Eigenschaften veränderbarem Material (Resistmaterial) mit einer Galvanikelektrode (51);

e) Erzeugen von mit der Galvanikelektrode (51) verbundenen Negativformen (61) der Formkanäle durch partielles Bestrahlen und partielles Entfernen des Resistmaterials unter Ausnutzung der durch die Bestrahlung erzeugten unterschiedlichen Materialeigenschaften.

f) Erzeugen einer die Negativformen (61) der Formkanäle einschließenden Galvanikschicht (71) auf der Galvanikelektrode (51), Einebnen der Galvanikschicht (71) und Entfernen der Negativformen (61).

g) Vollständiges oder teilweises Entfernen der Galvanikelektrode bei Bedarf.

## Claims

1. Method of making spinneret plates with spinneret channels, by utilising a shaped plate which includes channels shaped to correspond to the spinneret channels, characterised by the following method steps:

a) joining together the shaped plate (12), which includes the shaped channels (11), and a galvanic electrode (14), which includes feed channels (13), so that the shaped channels (11) and the feed channels (13) communicate with one another;

b) producing negative forms (21) of the spinneret channels, which forms are joined to the galvanic electrode (14), by jointly filling the shaped channels (11) and the feed channels (13) with an electrically insulating moulding material (22), and subsequently removing the shaped plate (12);

c) producing a galvanic layer (31), which incorporates the negative forms (21) of the spinneret channels, levelling this galvanic layer and removing the negative forms (21) and the remaining moulding material (22).

2. Method according to claim 1, characterised in that the shaped plate is made by the following method steps:

d) joining a layer (54) of material (resist material), the properties of which are changeable as a result of energy-rich radiation, to a galvanic electrode (51);

e) producing negative forms (61) of the shaped channels, which forms are joined to the galvanic electrode (51), by partial irradiation and partial removal of the resist material utilising the different material properties produced by the irradiation;

f) producing a galvanic layer (71), which incorporates the negative forms (61) of the shaped channels, on the galvanic electrode (51), levelling the galvanic layer (71) and removing the negative forms (61);
g) wholly or partially removing the galvanic electrode as required.

## Revendications

1. Procédé pour fabriquer des plaques à filières avec des canaux de filières, en utilisant une plaque de moulage qui comprend des canaux de moulage, procédé caractérisé en ce qu'il comporte les étapes suivantes:

a) assemblage de la plaque de moulage (12) comprenant les canaux de moulage (11) avec une électrode galvanique (14) comprenant des canaux d'alimentation (13), de façon que les canaux de moulage (11) et les canaux d'alimentation (13) se raccordent les uns aux autres,

b) obtention de formes négatives (21), reliées à l'électrode galvanique (14), des canaux de filières, par remplissage commun des canaux de moulage (11) et des canaux d'alimentation (13) par un matériau de moulage (22) électriquement isolant, et ensuite enlèvement de la plaque de moulage (12),

c) obtention d'une couche galvanique (31) incluant les formes négatives (21) des canaux de filières, égalisation de cette couche galvanique et enlèvement des formes négatives (21) ainsi que du reste du matériau de moulage (22).

2. Procédé selon la revendication 1, caractérisé en ce que la plaque de moulage est réalisée au cours des étapes suivantes du procédé:

d) association à une électrode galvanique (51) d'une couche (54) constituée d'un matériau (matériau de protection), dont les propriétés sont susceptibles d'être modifiées par une irradiation à haute énergie,

e) obtention de formes négatives (61) des canaux de moulage, reliées à l'électrode galvanique (51), par irradiation partielle et enlèvement partiel du matériau de protection, en utilisant les différentes propriétés de ce matériau obtenues grâce à l'irradiation,

f) obtention sur l'électrode galvanique (51) d'une couche galvanique (71) comprenant les formes négatives (61) des canaux de moulage, égalisation de cette couche galvanique (71) et enlèvement des formes négatives (61)

g) enlèvement complet ou partiel de l'électrode galvanique en cas de besoin.

Fig. 1

Fig. 2

Fig. 3

Fig. 4

Fig. 5

Fig. 6

Fig. 7

Fig. 8

Fig. 9